# EUROPEAN PATENT APPLICATION

(11) **EP 4 438 540 A1**
(43) Date of publication of application: **02.10.2024**
(21) Application number: 24157574.5
(22) Date of filing: 14.02.2024
(51) Int. Cl.: B65H 75/44, B65H 75/48, H02G 11/02

(54) **SLIM TYPE RECOILER**

(30) Priority: 23.03.2023 KR 20230037802
(71) Applicant: Kum Oh Electronics CO., LTD., Bucheon-si, Gyeonggi-do 420-859 (KR)
(72) Inventor: KIM, Ki Sang, 420-859 Bucheon-si (KR)
(74) Representative: Noréns Patentbyrå AB

(57) **Abstract**

Proposed is a slim type recoiler. The recoiler includes a body (10) having a side wall member (11), an upper wall member (13), a lower wall member (15), and having an accommodating space formed inside the body, a reel drum (20) which is mounted in the accommodating space such that the reel drum is capable of being rotated and on which a first cable (1) is wound, a first substrate (30) coupled to a lower surface of the reel drum and provided with first (31) and second (32) connection rings to which two conducting wires of the first cable are respectively connected, and a second substrate (40) coupled to an upper surface of the lower wall member of the body, the second substrate being provided with first (41) and second (42) tension pieces to which two conducting wires of a second cable (2) are respectively connected and which are respectively connected to the first and second connection rings.

## Description

### CROSS REFERENCE TO RELATED APPLICATION

The present application claims priority to Korean Patent Application No. 10-2023-0037802, filed March 23, 2023, the entire contents of which are incorporated herein for all purposes by this reference.

### BACKGROUND OF THE INVENTION

### Field of the Invention

The present disclosure relates to a recoiler configured to wind or unwind a cable such that the cable is pulled in and out of a body. More particularly, the present disclosure relates to a slim type recoiler in which the thickness thereof is minimized to the maximum without occurring deformation, the slim type recoiler being configured such that a connection between a connection ring and a tension piece is stably realized.

### Description of the Related Art

A recoiler is an apparatus in which a cable of an earphone, a cable of a charger, or the like is wound inside a body when the cable is not in use, thereby facilitating storage of the cable and preventing damage to the cable. Furthermore, the recoiler is an apparatus in which the cable is unwound and pulled out from inside the body when the cable is used.

Recently, the recoiler is used in a store in order to pull in and out a charger cable for preventing theft while an exhibition product is charged.

As a conventional technology related to the recoiler, Korean Patent No. 10-0433005 "APPARATUS FOR ARRANGING CABLE", Korean Patent No. 10-1417707 "PORTABLE TERMINAL CASE WITH EARPHONE", Korean Patent No. 10-1507735 "CABLE UNIT ASSEMBLY", and so on have been proposed.

In the recoiler according to the conventional technology, a body, a reel drum, and so on are formed of injected plastic in order to reduce the manufacturing cost. When a thickness of plastic is thin, bending deformation of the plastic may easily occur and the plastic may easily break due to external shock, so that the plastic has a thickness equal to or more than a predetermined thickness and a thickness of the recoiler becomes thicker accordingly.

In addition, in order to maintain a connection state during a process of pulling in and out first and second cables, a connection ring having a planar structure is provided on a first substrate that is connected to the first cable and a tension piece having a rounded structure is provided on a second substrate that is connected to the second cable. In the conventional technology, there are problems that a bending phenomenon occurs in the reel drum since the first substrate is fastened to and coupled to the reel drum by using a bolt, a bending phenomenon occurs in an upper plate and a lower plate of the reel drum since the upper plate and the lower plate are fastened to and coupled to each other by using a bolt, and the tension piece is separated from the second substrate due to external force repeatedly applied during a pulling in and out process.

### SUMMARY OF THE INVENTION

Accordingly, the present disclosure has been made keeping in mind the above problems occurring in the related art, and an objective of the present disclosure is to provide a slim type recoiler that secures strength without causing bending deformation while reducing the thickness of a body, the recoiler being configured such that a bending phenomenon due to fastening of a bolt does not occur since the bolt is not used when a substrate is coupled to the body or a reel drum, the recoiler being configured such that there is no risk of a tension piece being separated from a second substrate, and the recoiler being configured such that a lower plate and an upper plate of the reel drum are easily and firmly coupled to each other and a bending phenomenon does not occur in the lower and upper plates.

In order to achieve the above objective, according to the present disclosure, there is provided a slim type recoiler including: a body having a side wall member, an upper wall member, and a lower wall member, the body being provided with an accommodating space formed inside the body; a reel drum which is mounted in the accommodating space such that the reel drum is capable of being rotated and on which a first cable is wound; a first substrate coupled to a lower surface of the reel drum and provided with a first connection ring and a second connection ring to which two conducting wires of the first cable are respectively connected; and a second substrate coupled to an upper surface of the lower wall member of the body, the second substrate being provided with a first tension piece and a second tension piece to which two conducting wires of a second cable are respectively connected and which are respectively connected to the first connection ring and the second connection ring, wherein a metal plate is used as the lower wall member of the body, a center portion of the first tension piece and a center portion of the second tension piece are attached to a lower surface of the second substrate, and opposites sides of the first tension piece and opposite sides of the second tension piece pass through the second substrate and protrude to an upper surface of the second substrate.

In addition, a press-fit protrusion configured to guide a coupling position of the second substrate and to reinforce strength of the lower wall member may be formed on the upper surface of the lower wall member.

The reel drum may include a lower plate provided with a separation protrusion portion which separates the lower plate into an inner space and an outer space and which is provided on an upper surface of the lower plate, and may include an upper plate provided with a hook protrusion which is provided on a lower surface of the upper plate, the hook protrusion being inserted into an insertion groove formed in the separation protrusion portion and being hook-coupled to the separation protrusion portion.

In the slim type recoiler according to the present disclosure, since the metal plate is used as the upper wall member and the lower wall member of the body, the strength of the recoiler is secured while the thickness of the recoiler is reduced, thereby realizing slimness of the recoiler. Furthermore, the bending phenomenon does not occur since the bolt is not used when the substrates are coupled, the bending phenomenon does not occur since the upper plate and the lower plate of the reel drum are assembled and coupled to each other in a hook manner without using the bolt, and there is no risk of the tension pieces being separated from the second substrate even when external force is applied to the opposite sides of the upper portions of the tension pieces since the tension pieces are firmly attached to the lower surface of the second substrate, so that the slim type recoiler of the present disclosure is significantly useful for industrial development.

### BRIEF DESCRIPTION OF THE DRAWINGS

The above and other objectives, features, and other advantages of the present disclosure will be more clearly understood from the following detailed description when taken in conjunction with the accompanying drawings, in which:

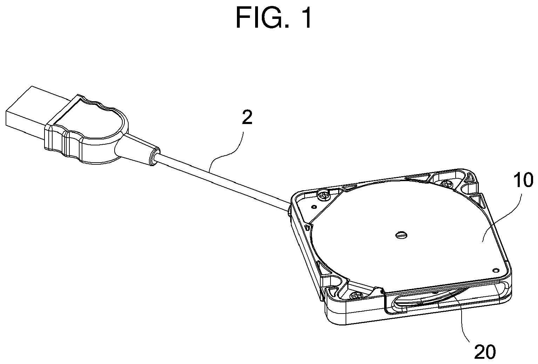

FIG. 1 is a perspective view illustrating a slim type recoiler according to the present disclosure;

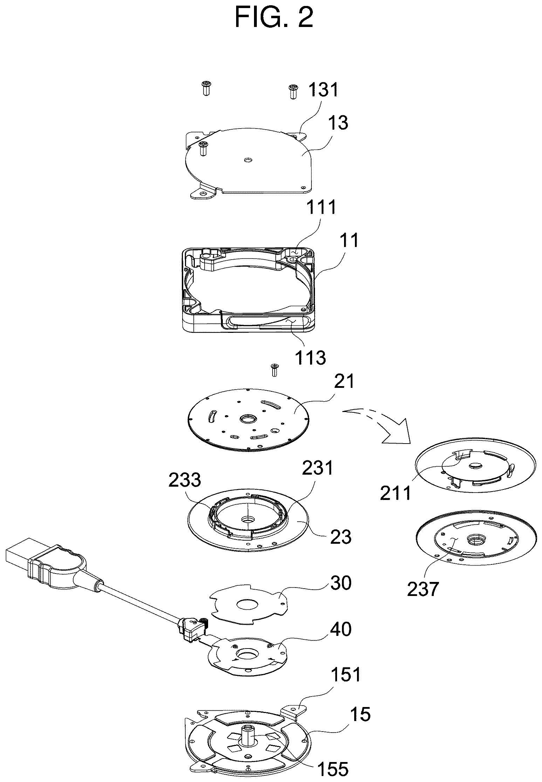

FIG. 2 is an exploded perspective view of FIG. 1;

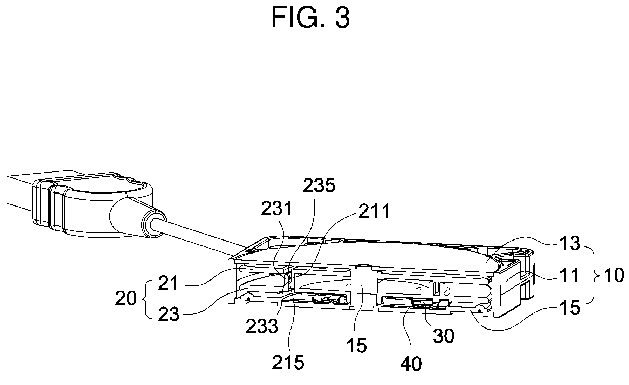

FIG. 3 is a cross-sectional view of FIG. 1; and

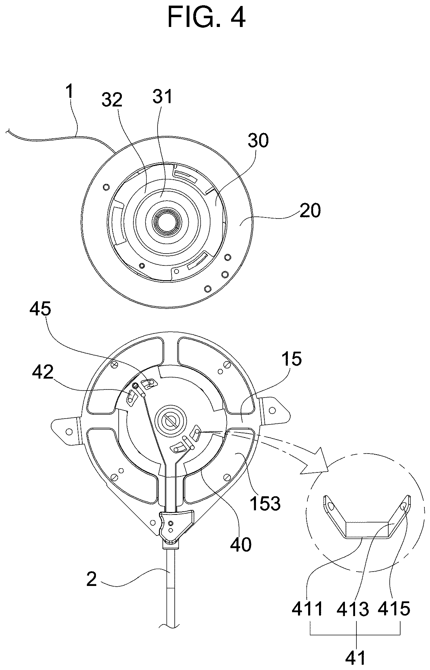

FIG. 4 is a view illustrating a first substrate and a second substrate as main parts.

### DETAILED DESCRIPTION OF THE INVENTION

Hereinafter, a slim type recoiler according to the present disclosure will be described in more detail with reference to the drawings.

As illustrated in the drawings, the slim type recoiler according to the present disclosure includes a body 10, a reel drum 20, a first substrate 30, and a second substrate 40.

The body 10 includes a side wall member 11, an upper wall member 13, and a lower wall member 15.

The side wall member 11 is formed of a plastic material manufactured by injection molding, and is formed in a rectangular frame shape or a circular frame shape having upper and lower portions open.

Seating grooves 111 in which each of coupling portions 131 and 151 of the upper wall member 13 and the lower wall member 15 is seated are formed in upper and lower edges of the side wall member 11, and a through-hole 113 through which a first cable 1 passes during a pulling in and out process is formed in a side portion of the side wall member 11.

Metal plates are used as the upper wall member 13 and the lower wall member 15, so that each thickness of the upper and lower wall members 13 and 15 is minimized and strength for preventing bending is secured.

The coupling portions 131 and 151 seated in the seating groove 111 of the side wall member 11 protrude on respective edges of the upper wall member 13 and the lower wall member 15. The coupling portions 131 and 151 of the upper wall member 13 and the lower wall member 15 are fastened and coupled to the side wall member 11 by a bolt.

The upper wall member 13 and the lower wall member 15 form an accommodating space inside the body 10 by covering opening portions of the upper and lower portions of the side wall member 11, and hold the side wall member 11 so that a bending phenomenon does not occur in the side wall member 11.

A rotary shaft 155 is provided on a center of the lower wall member 15, and a fitting groove that is fitted and coupled to a first end of a spring (not illustrated) is formed in the rotary shaft 155.

Press-fit protrusions 153 are formed on an edge of an upper surface of the lower wall member 15, so that the strength of the lower wall member 15 is reinforced and a position to which the second substrate 40 is coupled is guided.

The reel drum 20 is coupled to the rotary shaft 155, and is accommodated in the accommodating space of the body 10 such that the reel drum 20 is capable of being rotated.

The reel drum 20 includes an upper plate 21 and a lower plate 23 that are assembled and coupled to each other.

A separation protrusion portion 231 that separates the reel drum 20 into an inner space and an outer space protrudes in a circular shape and is provided on the upper surface of the lower plate 23, and an insertion groove 233 is formed in the separation protrusion portion 231. A step protrusion portion 235 protrudes on an inner surface of the separation protrusion portion 231 in which the insertion groove 233 is formed.

A plurality of hook protrusions 211 is formed on a lower surface of the upper plate 21, and a plurality of hook protrusion portions 215 is formed on the hook protrusions 211. The hook protrusion 211 is inserted into the insertion groove 233 of the separation protrusion portion 231, and the hook protrusion portion 215 is hook-coupled to the step protrusion portion 235.

The upper plate 21 and the lower plate 23, which are hook-coupled to each other, may be fixed and coupled to each other by being fastened and coupled together at one point with a bolt.

An accommodating groove 237 accommodated on the first substrate 30 is formed on a lower surface of the lower plate 23.

The spring is mounted in the inner space of the reel drum 20. The first end of the spring is fixed and coupled to the rotary shaft 155, and a second end of the spring is fixed and coupled to the separation protrusion portion 231, so that the spring provides an elastic force for rotating the reel drum 20 so that the pulled out first cable 1 is capable of being automatically pulled in. It is preferable that an additional space is secured in a movement section so as to minimize friction when the spring is moved in the inner space of the reel drum 20.

The first cable 1 that is pulled in and out is wound on the outer space of the reel drum 20. For reference, when a second cable 2 is also pulled in and out, the second cable 2 may also be wound on the outer space.

The first substrate 30 is accommodated on the accommodating groove 237 formed on the lower surface of the lower plate 23 of the reel drum 20 and does not protrude on a surface of the reel drum 20, and is firmly attached to the bottom of the accommodating groove 237 by a double-sided tape.

A first connection ring 31 and a second connection ring 32 to which two conducting wires of the first cable 1 are respectively connected are provided on a surface (a lower surface) of the first substrate 30. The first connection ring 31 and the second connection ring 32 are formed in planar structures and are formed in circular shapes having diameters different from each other, and are respectively provided on an inner side and an outer side of the surface of the first substrate 30.

It may be preferable to apply 3 Oz plating (hard plating) to the first connection ring 31 and the second connection ring 32 in order to reduce wear caused by contact.

The second substrate 40 is attached to an upper surface of the lower wall member 15 of the body 10, and the second cable 2 is connected to the second substrate 40.

The second substrate 40 is disposed inside the press-fit protrusions 153 of the lower wall member 15, does not protrude beyond the press-fit protrusions 153, and is firmly attached to the surface (the upper surface) of the lower wall member 15 by a double-sided tape.

A first tension piece 41 and a second tension piece 42 respectively to the first connection ring 31 and the second connection ring 32 of the first substrate 30 and respectively connected to two conducting wires of the second cable 2 are provided on the second substrate 40.

The first tension piece 41 and the second tension piece 42 are formed in rounded structures such that opposite sides of the first tension piece 41 and opposite sides of the second piece 42 protrude upward. More specifically, in the rounded structure, a planar portion 411 is provided on a center of the rounded structure, and a bent portion 413 which is bent from opposite sides of the planar portion 411 and which has elasticity is provided.

Each planar portion 411 of the first tension portion 41 and the second tension portion 42 is attached to a rear surface of the second substrate 40, each bent portion 413 of the opposite sides passes through each through-hole 45 of the second substrate 40, and an protrudes upward through a through hole 45 of the second substrate 40, and each embossing 415 in contact with each of the first connection ring 31 and the second connection ring 32 of the second substrate 40 is formed on each end portion side of the bent portion 413.

In describing the present disclosure above, the slim type recoiler having the specific shape and the specific configuration has been described with reference to the accompanying drawings, but the present disclosure may be variously modified, changed, and substituted by those skilled in the art. Such modification, change, and substitution should be construed as falling within the scope of the present disclosure.

## Claims

1. A slim type recoiler comprising:
a body having a side wall member, an upper wall member, and a lower wall member, the body being provided with an accommodating space formed inside the body;
a reel drum which is mounted in the accommodating space such that the reel drum is capable of being rotated and on which a first cable is wound;
a first substrate coupled to a lower surface of the reel drum and provided with a first connection ring and a second connection ring to which two conducting wires of the first cable are respectively connected; and
a second substrate coupled to an upper surface of the lower wall member of the body, the second substrate being provided with a first tension piece and a second tension piece to which two conducting wires of a second cable are respectively connected and which are respectively connected to the first connection ring and the second connection ring,
wherein a metal plate is used as the lower wall member of the body, a center portion of the first tension piece and a center portion of the second tension piece are attached to a lower surface of the second substrate, and opposites sides of the first tension piece and opposite sides of the second tension piece pass through the second substrate and protrude to an upper surface of the second substrate.

2. The slim type recoiler of claim 1, wherein a press-fit protrusion configured to guide a coupling position of the second substrate and to reinforce strength of the lower wall member is formed on the upper surface of the lower wall member.

3. The slim type recoiler of claim 1, wherein the reel drum comprises a lower plate provided with a separation protrusion portion which separates the lower plate into an inner space and an outer space and which is provided on an upper surface of the lower plate, and comprises an upper plate provided with a hook protrusion which is provided on a lower surface of the upper plate, the hook protrusion being inserted into an insertion groove formed in the separation protrusion portion and being hook-coupled to the separation protrusion portion.
